# EUROPEAN PATENT APPLICATION

(11) **EP 4 851 238 A1**
(43) Date of publication of application: **09.12.2026**
(21) Application number: 26181156.6
(22) Date of filing: 26.05.2026
(51) Int. Cl.: C08K 5/3445, B60C 1/00, C08K 3/04, C08K 3/36, C08K 5/05

(54) **RUBBER COMPOSITIONS AND ARTICLES THEREOF**

(30) Priority: 02.06.2025 US 202519225592
(71) Applicant: The Goodyear Tire & Rubber Company, Akron, OH 44316 (US)
(72) Inventor: JOHNSON, Dawn Michelle, Uniontown, 44685 (US); WELTER, Carolin Anna, 54340 Schleich (DE); DENNIS-PELCHER, Robert Vincent, Uniontown, 44685 (US); HAYAT, Jeffery Hakim, Uniontown, 44685 (US)
(74) Representative: Leslie, Edward

(57) **Abstract**

A vulcanizable composition is disclosed comprising an elastomer, 20 phr to 60 phr of a first carbon black, wherein the first carbon black has a statistical thickness surface area (STSA) in a range of from 50 m²/g to 70 m²/g as measured in accordance with ASTM D6556-21, 0.1 phr to 3 phr of a tear strength agent, 2 phr to 20 phr of a silica, wherein the silica has a hydrated-cetyltrimethylammonium bromide (CTAB) surface area in a range of from 160 m²/g to 280 m²/g, and 1 phr to 10 phr of a dispersion aid, wherein the dispersion aid is or comprises one or more compounds with a softening point in a range of from 70°C to 120°C. Also, a vulcanized composition comprising the vulcanizable composition, an article comprising the vulcanized composition such as a cord-reinforced rubber component of a tire, and a method of manufacturing is disclosed.

## Description

### BACKGROUND

The demand for improved tire performance has resulted in the development and evaluation of new materials that have desirable properties. Improving tire properties such as rolling resistance while maintaining the balance in tradeoffs can be challenging. For example, additives that aid in achieving low rolling resistance in tire components such as the tire ply can also contribute to negative impacts on durability indicators (e.g., tear strength). There is a need for rubber formulations that have a balance between tire rolling resistance and durability indicators. These needs and other needs are satisfied by the present invention.

### SUMMARY OF THE INVENTION

The invention relates to a vulcanizable rubber composition in accordance with claim 1, to a vulcanized rubber composition in accordance with claim 11, to an article in accordance with claim 14, and to a method in accordance with claim 15.

Dependent claims refer to preferred embodiments of the invention.

The invention, in one preferred aspect, relates to a vulcanizable composition, comprising: an elastomer; 20 phr to 60 phr of a first carbon black, wherein the first carbon black has a statistical thickness surface area (STSA) of 50 m2/g to 70 m2/g as measured in accordance with ASTM D6556-21; 0.1 phr to 3 phr of a tear strength agent; 2 phr to 20 phr of a silica, wherein the silica has a hydrated-cetyltrimethylammonium bromide (CTAB) surface area of 160 m2/g to 280 m2/g; and 1 phr to 10 phr of a dispersion aid, wherein the dispersion aid comprises one or more compounds with a softening point of 70°C to 120°C. Also disclosed herein are vulcanized composition comprising the vulcanizable composition as disclosed herein, wherein the vulcanizable composition has been cured, and articles comprising the disclosed vulcanized compositions.

The invention, in one preferred aspect, also relates to a method comprising: forming a rubber composition by combining together an elastomer; 20 phr to 60 phr of a first carbon black; 0.1 phr to 3 phr of a tear strength agent; 2 phr to 20 phr of a silica; and 1 phr to 10 phr of a dispersion aid; coating at least one surface of a cord with the rubber composition; and curing the cord, thereby forming a cord-reinforced rubber component; wherein the first carbon black comprises a first carbon black with a statistical thickness surface area (STSA) of 50 m²/g to 70 m²/g; wherein the silica has a hydrated-cetyltrimethylammonium bromide (CTAB) surface area of 160 m²/g to 280 m²/g; and wherein the dispersion aid comprises one or more compounds with a softening point of 70°C to 120°C.

Other systems, methods, features, and advantages of the present invention will be or become apparent to one with skill in the art upon examination of the following detailed description. It is intended that all such additional systems, methods, features, and advantages be included within this description, be within the scope of the present invention, and be protected by the accompanying claims. In addition, all optional and preferred features and modifications of the described aspects are usable in all aspects of the invention taught herein. Furthermore, the individual features of the dependent claims, as well as all optional and preferred features and modifications of the described aspects are combinable and interchangeable with one another.

### DETAILED DESCRIPTION OF PREFERRED EMBODIMENTS OF THE INVENTION

Any recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

All publications mentioned herein are incorporated herein by reference to disclose and describe the methods and/or materials in connection with which the publications are cited.

Unless defined otherwise, all technical and scientific terms used herein have the same meaning as commonly understood by one of ordinary skill in the art to which the disclosed compositions and methods belong. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

Prior to describing the various aspects of the present invention, the following definitions are provided and should be used unless otherwise indicated. Additional terms may be defined elsewhere in the present invention.

### DEFINITIONS

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used herein, the term "and/or" includes any and all combinations of one or more of the associated listed items. Expressions such as "at least one of," when preceding a list of elements, modify the entire list and do not modify the individual elements of the list.

As used herein, nomenclature for compounds, including organic compounds, can be given using common names, IUPAC, IUBMB, or CAS recommendations for nomenclature. When one or more stereochemical features are present, Cahn-Ingold-Prelog rules for stereochemistry can be employed to designate stereochemical priority and E/Z specification. One of skill in the art can readily ascertain the structure of a compound if given a name, either by systemic reduction of the compound structure using naming conventions, or by commercially available software, such as CHEMDRAW^{™} (Cambridgesoft Corporation, U.S.A.).

It should be noted that ratios, concentrations, amounts, and other numerical data can be expressed herein in a range format. It will be further understood that the endpoints of each of the ranges are significant both in relation to the other endpoint, and independently of the other endpoint.

It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "0.1% to 5%" should be interpreted to include not only the explicitly recited values of 0.1% to 5%, but also include individual values (e.g., 1%, 2%, 3%, and 4%) and the sub-ranges (e.g., 0.5% to 1.1%; 5% to 2.4%; 0.5% to 3.2%, and 0.5% to 4.4%, and other possible sub-ranges) within the indicated range.

As used herein, the terms "optional" or "optionally" means that the subsequently described event or circumstance can or cannot occur, and that the description includes instances where said event or circumstance occurs and instances where it does not.

The terms "rubber" and "elastomer" may be used herein interchangeably, unless indicated otherwise.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber/elastomer.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In one aspect, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In one aspect, rubber compositions can be cured in molds in order to form finished articles such as tires.

As used herein, the term "repeat unit" as referenced in the elastomers described herein are derived from monomers used to produce the partially saturated elastomers. For example, polybutadiene has the repeat unit as provided below.

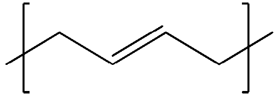

In certain aspects, when the elastomer is the polymerization product of two different monomers (e.g., A and B), the repeat unit can be represented by -A-B-.

As used herein, a "residue" of a chemical species refers to the moiety that is the resulting product of the chemical species in a particular reaction scheme or subsequent formulation or chemical product, regardless of whether the moiety is actually obtained from the chemical species. Thus, an isoprene residue in an elastomer refers to one or more - CH₂CH=C(CH₃)CH₂- units in the elastomer, regardless of whether isoprene was used to prepare the elastomer. Similarly, a butadiene residue in an elastomer refers to one or more - CH₂CH=CHCH₂- moieties in the elastomer, regardless of whether the residue is obtained by reacting sebacic acid or an ester thereof to obtain the polyester.

The term "alkyl" as used herein is a branched or unbranched saturated hydrocarbon group of 1 to 24 carbon atoms, such as methyl, ethyl, *n*-propyl, isopropyl, *n*-butyl, isobutyl, *s-*butyl, *t*-butyl, *n*-pentyl, isopentyl, *s*-pentyl, neopentyl, hexyl, heptyl, octyl, nonyl, decyl, dodecyl, tetradecyl, hexadecyl, eicosyl, and tetracosyl. The alkyl group can be cyclic (i.e., cycloalkyl) or acyclic. The alkyl group can be branched or unbranched. The alkyl group can also be substituted or unsubstituted. For example, the alkyl group can be substituted with one or more groups including, but not limited to, alkyl, cycloalkyl, alkoxy, amino, ether, halide, hydroxy, nitro, silyl, sulfo-oxo, or thiol, as described herein. "Alkyl group" can also be a C1 alkyl, C1-C2 alkyl, C1-C3 alkyl, C1-C4 alkyl, and the like up to and including a C1-C24 alkyl.

Throughout the specification "alkyl" is generally used to refer to both unsubstituted alkyl groups and substituted alkyl groups; however, substituted alkyl groups are also specifically referred to herein by identifying the specific substituent(s) on the alkyl group. For example, the term "halogenated alkyl" or "haloalkyl" specifically refers to an alkyl group that is substituted with one or more halide. This practice is also used for other groups described herein. That is, while a term such as "cycloalkyl" refers to both unsubstituted and substituted cycloalkyl moieties, the substituted moieties can, in addition, be specifically identified herein.

The term "alkenyl" as used herein is a hydrocarbon group of from 2 to 24 carbon atoms with a structural formula containing at least one carbon-carbon double bond. The alkenyl group can be substituted with one or more groups including, but not limited to, alkyl, cycloalkyl, alkoxy, alkenyl, cycloalkenyl, alkynyl, cycloalkynyl, aryl, heteroaryl, aldehyde, amino, carboxylic acid, ester, ether, halide, hydroxy, ketone, azide, nitro, silyl, sulfo-oxo, or thiol, as described herein. The alkenyl group can be cyclic (i.e., cycloalkenyl) or acyclic. Asymmetric structures such as (A¹A²)C=C(A³A⁴) are intended to include both the *E* and *Z* isomers. This can be presumed in structural formulae herein wherein an asymmetric alkene is present, or it can be explicitly indicated by the bond symbol C=C.

The term "alkynyl" as used herein is a hydrocarbon group of 2 to 24 carbon atoms with a structural formula containing at least one carbon-carbon triple bond. The alkynyl group can be unsubstituted or substituted with one or more groups including, but not limited to, alkyl, cycloalkyl, alkoxy, alkenyl, cycloalkenyl, alkynyl, cycloalkynyl, aryl, heteroaryl, aldehyde, amino, carboxylic acid, ester, ether, halide, hydroxy, ketone, azide, nitro, silyl, sulfo-oxo, or thiol, as described herein. The alkynyl group can be cyclic (i.e., cycloalkynyl) or acyclic.

The term "aryl" as used herein is a group that contains any carbon-based aromatic group including, but not limited to, benzene, naphthalene, phenyl, biphenyl or anthracene. The aryl group can be substituted or unsubstituted. The aryl group can be substituted with one or more groups including, but not limited to, alkyl, cycloalkyl, alkoxy, alkenyl, cycloalkenyl, alkynyl, cycloalkynyl, aryl, heteroaryl, aldehyde, -NH₂, carboxylic acid, ester, ether, halide, hydroxy, ketone, azide, nitro, silyl, sulfo-oxo, or thiol as described herein.

In defining various terms, "A¹," "A²," and "A³" are used herein as generic symbols to represent various specific substituents. These symbols can be any substituent, not limited to those disclosed herein, and when they are defined to be certain substituents in one instance, they can, in another instance, be defined as some other substituents.

As used herein, the term "hydrazyl" is represented by the formula -N(A¹)N(A²)(A³), where A¹, A², and A³ are independently hydrogen, alkyl, alkenyl, alkynyl, or aryl as described herein.

As used herein, the term "N'-alkylidene hydrazyl" is represented by the formula -N(A¹)N=C(A²)(A³), where A¹ is hydrogen, alkyl, alkenyl, alkynyl, or aryl as described herein and A² and A³ are independently alkyl, alkenyl, alkynyl, or aryl as described herein.

As used herein, the term "hydrazyl carboxyamino" is represented by the formula -N[N(A¹)N(A²)]C(O)OH, where A¹ and A² are independently hydrogen, alkyl, alkenyl, alkynyl, or aryl as described herein.

Unless otherwise specified, temperatures referred to herein are based on atmospheric pressure (i.e. one atmosphere).

### RUBBER COMPOSITIONS

In one preferred aspect, the invention relates to compositions, such as vulcanizable rubber compositions and vulcanized rubber compositions, comprising an elastomer; 20 phr to 60 phr of a first carbon black; 0.1 phr to 3 phr of a tear strength agent; 2 phr to 20 phr of a silica; and 1 phr to 10 phr of a dispersion aid, wherein the dispersion aid comprises one or more compounds with a softening point of 70°C to 120°C. The softening point is measured using the Ring-and-Ball Method (see ASTM D36 or DIN ISO 4625). In a further aspect, the first carbon black can have a statistical thickness surface area (STSA) of 50 m²/g to 70 m²/g (measured in accordance with ASTM D6556-21). In another further aspect, the silica can have a hydrated-cetyltrimethylammonium bromide (CTAB) surface area of 160 m²/g to 280 m²/g. The compositions disclosed herein exhibit relatively low hysteresis while maintaining stiffness and durability (quantified, for example, by tear strength). The present invention also relates to articles, such as tires and/or components of tires, comprising the compositions and to methods of making the disclosed articles.

The composition comprises 100 phr of the elastomer. The elastomer can comprise repeat units formed by residues of monomers selected from one or more of ethylene, propylene, isobutene, butadiene, isoprene, styrene, acrylonitrile, and a combination thereof. In another aspect, the elastomer can be selected from isoprene-isobutylene-rubber (Butyl rubber, IIR), halogenated isoprene-isobutylene-rubber (HIIR), ethylene-propylene-diene-terpolymer (EPDM), styrene-butadiene copolymer (SBR), acrylonitrile-butadiene copolymer (AB), acrylonitrile-butadiene-styrene copolymer (ABS), polybutadiene, natural rubber, cis-polyisoprene, and a combination thereof. In another aspect, the elastomer can comprise 60 phr, 70 phr, 80 phr, 90 phr, or 100 phr of a first elastomer, where any value can be a lower and upper endpoint of a range (e.g., 60 phr to 100 phr). The first elastomer can comprise at least one elastomer including repeat units formed by residues of isoprene (e.g., natural rubber, synthetic cis-1,4-polyisoprene). As used herein, the term "natural rubber" refers to naturally-occurring rubber, such as can be harvested from sources such as Hevea rubber trees and non-Hevea sources (e.g., guayule shrubs and dandelions such as TKS). Natural rubber is derived predominantly from isoprene and thus is predominantly (e.g., at least 99 wt.%) polyisoprene, particularly cis-1,4-polyisoprene. In a further aspect, the elastomer can comprise 1 phr, 5 phr, 10 phr, 20 phr, 30 phr, or 40 phr of a second elastomer, where any value can be a lower and upper endpoint of a range (e.g., 1 phr to 40 phr). The second elastomer can comprise at least one elastomer including repeat units formed by residues of butadiene (e.g., methyl butadiene, dimethyl butadiene, pentadiene, and copolymers thereof). In a further aspect, the elastomers generally having a number average molecular weight (Mₙ) between 100,000 Da and 500,000 Da. Molecular weight Mₙ may be determined by methods known in the art, such as by gel permeation chromatography following ASTM D3536 or equivalent.

In another aspect, the first carbon black can have an STSA of 50 m²/g, 55 m²/g, 60 m²/g, 65 m²/g, or 70 m²/g (as measured in accordance with ASTM D6556-21), where any value can be a lower and upper endpoint of a range (e.g., 55 m²/g to 65 m²/g. The STSA provides a measurement of the external surface area of carbon black, which can be defined as the specific surface area that is accessible to rubber. In another aspect, the first carbon black can have an oil absorption number of a compressed sample (COAN) of 90 cc/100 g, 95 cc/100 g, 100 cc/100 g, 105 cc/100 g, or 110 cc/100 g (as measured in accordance with ASTM D3493-21), where any value can be a lower and upper endpoint of a range (e.g., 95 cc/100 g to 105 cc/100 g). Following the ASTM D3493-21 method, COAN is expressed as the number of cubic centimeters of paraffin absorbed by 100 g of carbon black after being compressed four times in a compression cylinder at 165 MPa (24,000 psi) under specified conditions. The composition can include additional carbon black components, such as N-type carbon black or combinations thereof, including those with ASTM designation ranging from N326 to N347 (e.g., N326, N330, N332, N339, N343, and N347). In another aspect, the elastomer can comprise 20 phr, 30 phr, 40 phr, 50 phr, or 60 phr of the first carbon black, where any value can be a lower and upper endpoint of a range (e.g., 30 phr to 50 phr). In another aspect, the elastomer can comprise from 1 phr, 5 phr, 10 phr, 20 phr, or 30 phr of the additional carbon black, where any value can be a lower and upper endpoint of a range (e.g., 1 phr to 10 phr).

In one aspect, the tear strength agent can comprise a compound having a structure represented by a formula: 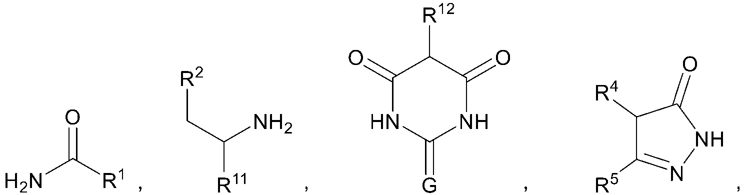 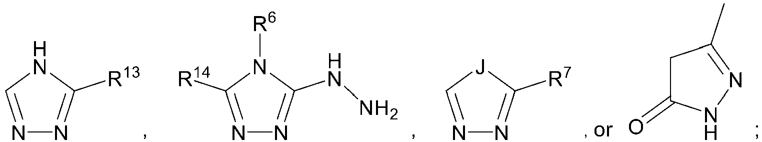 or any mixture thereof, wherein, R¹, R¹¹, R¹², R¹³, and R¹⁴ are individually selected from hydrogen, a hydrazyl group, an N'-alkylidene hydrazyl group, an N-allyl carbamoyl group (-C(O)-NH(allyl)), a 3-carboxyl acryloyl group (-C(O)-CH=CH-C(O)(OH)), a hydrazyl carboxyamino group, a thiocarboxyl group (-C(S)OH), and thiol; R² is thiol or hydroxy; G is sulfur or oxygen; R⁴ is a C1 to C4 alkenyl group optionally further substituted with a hydrazyl group, an N'-alkylidene hydrazyl group, an N-allyl carbamoyl group, a 3-carboxyl acryloyl group, a hydrazyl carboxyamino group, a thiocarboxyl group, or thiol; R⁵ is an alkyl group, an aralkyl group, a heterocycloalkyl group, heterocycloalkenyl group, heterocycloalkynyl group, or a heteroaryl group; R⁶ is hydrogen or an amino; J is nitrogen, sulfur, or oxygen; and R⁷ is a heterocycloalkyl group, heterocycloalkenyl group, heterocycloalkynyl group, or a heteroaryl group. In another aspect, the elastomer can comprise from 0.1 phr, 0.5 phr, 1 phr, 1.5 phr, 2 phr, 2.5 phr, or 3 phr of the tear strength agent, where any value can be a lower and upper endpoint of a range (e.g., 0.1 phr to 1.5 phr).

In another aspect, the tear strength agent can comprise a compound having a structure represented by a formula:

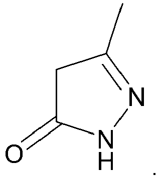

In one aspect, the elastomer can comprise from 2 phr, 5 phr, 10 phr, 15 phr, or 20 phr of the silica, where any value can be a lower and upper endpoint of a range (e.g., 5 phr to 15 phr). In one aspect, the silica can be amorphous (e.g., precipitated) silica and/or crystalline silica. The term "silica" is used herein to refer to silicon dioxide, which may contain minor amounts of impurities, generally less than 1 wt. %, resulting from the process in which the silica is formed. The term "precipitated silica" is used to refer to synthetic, amorphous silica, typically obtained by a process in which a silicate is precipitated with an acidifying agent. The surface area of silica can be measured in various ways. One method is by hydrated-cetyltrimethylammonium bromide or hydrated-CTAB surface area (referred to herein generally as CTAB surface area) in accordance ASTM D6845-20. The CTAB surface area reflects only the surface of the silica that is available for interaction with rubber molecules. In a further aspect, the silica has a CTAB surface area of 160 m²/g, 170 m²/g, 180 m²/g, 190 m²/g, 200 m²/g, 210 m²/g, 220 m²/g, 230 m²/g, 240 m²/g, 250 m²/g, 260 m²/g, 270 m²/g, or 280 m²/g, where any value can be a lower and upper endpoint of a range (e.g., 220 m²/g to 250 m²/g).

In one aspect, the dispersion aid can comprise a compound with a softening point of 70°C, 80°C, 90°C, 100°C, 110°C, or 120°C, wherein any value can be a lower and upper endpoint of a range (e.g., 70°C to 90°C).

The softening point is measured using the Ring-and-Ball Method (see ASTM D36 or DIN ISO 4625).

The dispersion aid can comprise a plurality of compounds with a softening point in the disclosed range. For example, the dispersion aid can comprise a first compound and a second compound wherein the first compound has a softening point that is less than that of the second compound. In another aspect, the dispersion aid can comprise at least one metal glycerolate compound or a derivative thereof, such as zinc glycerolate, calcium glycerolate, magnesium glycerolate, or derivatives thereof. In a further aspect, the dispersion aid can comprise a zinc glycerolate compound having a structure represented by a formula: 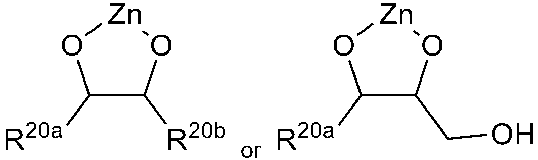 wherein R^{20a} and R^{20b} can be independently selected from hydrogen, a substituted or unsubstituted alkyl group, and a substituted or unsubstituted alkenyl group. In a further aspect, R^{20a} and R^{20b} can be independently selected from hydrogen; an alkyl group substituted with an amino, hydroxy, or thiol; and an alkenyl group substituted with an amino, hydroxy, or thiol. In one aspect, the composition can comprise the dispersion aid in an amount of 1 phr, 2 phr, 4 phr, 6 phr, 8 phr, or 10 phr, where any value can be a lower and upper endpoint of a range (e.g., 1 phr to 6 phr).

The composition can further comprise additional components such as an additional filler, an antidegradant, a peptizing agent, a processing aid, a cobalt salt, a curing aid, a curing agent (i.e., vulcanizing agent), or any combination thereof. Additional fillers can include reinforcing fillers such as calcium carbonate, alumina, aluminum hydroxide, clay (reinforcing grades), magnesium hydroxide, boron nitride, aluminum nitride, titanium dioxide, reinforcing zinc oxide, and combinations thereof. In one aspect, any additional fillers can be included in the composition in amounts of 1 phr, 10 phr, 20 phr, or 30 phr, where any value can be a lower and upper endpoint of a range (e.g., 1 phr to 20 phr). Antidegradants can include antioxidants and antiozonants. Representative antidegradants include, but are not limited to, waxes, phenylene diamine compounds (e.g., diphenyl-p-phenylenediamine, N-phenyl-N'-(1,3-dimethylbutyl)-p-phenylenediamine, N,N'-dixylene-p-phenylenediamine, hydroquinoline compounds (e.g., dihydroquinoline, 2,2,4-trimethyl-1,2-dihydroquinoline), amine compounds, dithiocarbamate compounds, phenolic compounds, phosphite compounds, toluimidazole compounds, and others, such as those disclosed in The Vanderbilt Rubber Handbook (1978), Pages 344 through 346. In one aspect, antidegradants can be included in the composition in amounts of 0.1 phr, 2 phr, 4 phr, 6 phr, 8 phr, or 10 phr, where any value can be a lower and upper endpoint of a range (e.g., 1 phr to 6 phr). Waxes can include microcrystalline waxes, paraffin waxes, and isoparaffin waxes. In one aspect, waxes can be included in the composition in amounts of 0.1 phr, 1 phr, 3 phr, or 5 phr, where any value can be a lower and upper endpoint of a range (e.g., 1 phr to 3 phr). Peptizing agents can include pentachlorophenol dibenzamidodiphenyl disulfide. In one aspect, peptizing agents can be included in the composition in amounts of 0.1 phr, 0.2 phr, 0.4 phr, 0.6 phr, 0.8 phr, or 1 phr, where any value can be a lower and upper endpoint of a range (e.g., 0.1 phr to 0.4 phr).

Processing aids can include liquid plasticizers, resins, and combinations thereof. Liquid plasticizers can include oils such as an extending oil present in the elastomers, a processing oil added during compounding, and a carrier oil present in other components of the composition. Suitable oils include, but are not limited to, various oils as are known in the art, including aromatic, paraffinic, naphthenic, vegetable oils, and low PCA oils, such as MES, TDAE, SRAE, and heavy naphthenic oils. Suitable vegetable oils include, for example, soybean oil, sunflower oil, and canola oil which are in the form of esters containing a certain degree of unsaturation. In one aspect, liquid plasticizers can be included in the composition in amounts of 1 phr, 10 phr, 20 phr, or 30 phr, where any value can be a lower and upper endpoint of a range (e.g., 1 phr to 10 phr). Resins can include tackifying resins, such as unreactive phenol formaldehyde, and stiffness resins, such as reactive phenol formaldehyde resins and resorcinol or resorcinol and hexamethylene tetramine, hexa(methoxymethyl) melamine resins, benzoxazine resins, and hydrocarbon resins. Hydrocarbon resins can include aromatic, aliphatic, and cycloaliphatic resins. In one aspect, resins can be included in the composition in amounts of 0.1 phr, 1 phr, 2 phr, 4 phr, 6 phr, 8 phr, or 10 phr, where any value can be a lower and upper endpoint of a range (e.g., 1 phr to 6 phr).

Cobalt salts can include an organic salt of cobalt or an inorganic salt of cobalt (e.g., cobalt chloride). Examples of organic cobalt salts include cobalt salts of fatty acids and cobalt salts of an aliphatic or alicyclic carboxylic acids containing from 6 to 30 carbon atoms. More specific examples of such cobalt salts include cobalt naphthenate, cobalt octanoate, cobalt linoleate, cobalt stearate, cobalt oleate, cobalt acetate, cobalt neodecanoate, cobalt tallate, cobalt resinate, cobalt acetonate, in situ salts prepared from cobalt hydroxide and an organic acid such as naphthenic acid, stearic acid, oleic acid, acetic acid, linoleic acid, cobalt-boron complex salts, cobalt-aluminum complex salts, and combinations thereof. Examples of complex salts containing aluminum and/or boron include aluminum and/or boron linked to a divalent cobalt through oxygen atom(s) and containing at least one acyloxy radical attached to cobalt. Complex cobalt-aluminum and cobalt-boron complex salts include those with the general formula X-Co-[O-T(Y)]ₘ-[O-Co]ₙ-Y, where X is an acyloxy radical, T is selected from boron and aluminum, Y is an alkoxy or acyloxy radical, m is at least 1, and n is 0 or 1. In one aspect, the cobalt salt can be included in the composition in amounts of 0.1 phr, 1 phr, 2 phr, 3 phr, 4 phr, or 5 phr, where any value can be a lower and upper endpoint of a range (e.g., 0.1 phr to 2 phr).

Curing aids can include activators, accelerators, retarders, and combinations thereof., Activators can include, but are not limited to, magnesium oxide, zinc oxide, calcium oxide, and polyethylene glycol. Other examples of cure activators include fatty acids and thiourea compounds (such as thiourea and dihydrocarbylthioureas (e.g., dialkylthioureas and diarylthioureas). Examples of fatty acids include, but are not limited to, stearic acid, palmitic acids, oleic acid, lauric acid, zinc salts thereof, and mixtures thereof. Activators can be individually included in the composition in amounts of 0.1 phr, 5 phr, 10 phr, 15 phr, or 20 phr, where any value can be a lower and upper endpoint of a range (e.g., 1 phr to 10 phr). Accelerators can include, but are not limited to, amine compounds, sulfenamide compounds (e.g., N-cyclohexyl-2-benzothiazolesulfenamide and N-tertbutyl-2-benzothiazolesulfenamide), guanidine compounds (e.g., diphenylguanidine, N,N'-diphenyl guanidine), dithiocarbamate compounds, thiadiazol compounds, thiazole compounds, thiourea compounds, thiuram compound, and xanthate compounds. In one aspect, a single accelerator system can be used, i.e., primary accelerator. In other aspect, a primary accelerator can be used in combination with a secondary accelerator. The secondary accelerator can be used in a smaller amount than the primary accelerator. Retarders can include, but are not limited to, phthalic anhydrides, phthalimides (e.g., N-(cyclohexylthio)phthalimide), sulfenamide compounds, and acids (e.g., benzoic acid and salicylic acid). Accelerators and retarders can be individually included in the composition in amounts of 0.1 phr, 2 phr, 4 phr, 6 phr, 8 phr, or 10 phr, where any value can be a lower and upper endpoint of a range (e.g., 1 phr to 6 phr). Curing or vulcanizing agents can include, but are not limited to, elemental sulfur, insoluble polymeric sulfur, soluble sulfur, and sulfur donating vulcanizing agents (for example, an amine disulfide, polymeric polysulfide, sulfur olefin adduct), and combinations thereof. In one aspect, curing agents Curing agents can be included in amounts of 0.1 phr, 1 phr, 2 phr, 4 phr, 6 phr, 8 phr, or 10 phr, where any value can be a lower and upper endpoint of a range (e.g., 1 phr to 6 phr).

The compositions disclosed herein include vulcanizable compositions and vulcanized compositions. In one aspect, the vulcanizable compositions can be cured at a temperature of 150°C for 32 minutes to form the vulcanized compositions. In one aspect, the vulcanized compositions can have a storage shear modulus that is 8%, 10%, 20%, 30%, or 40% larger (where any value can be a lower and upper endpoint of a range, e.g., 8% to 30%) than the storage shear modulus of an equivalent composition that does not comprises the tear strength agent and the dispersion aid.

The storage shear modulus is measured at a strain amplitude of 10%, a temperature ranging from 90°C to 110°C (e.g., 100°C), and a frequency ranging from 1 Hz to 10 Hz (e.g., 1 Hz). Storage shear modulus of a rubber composition measured after cure can be performed using a rubber process analyzer (e.g., RPA2000^{™} from Alpha Technologies) in accordance with ASTM D5289-19a and/or ASTM D6601-19a.

In another aspect, the vulcanized composition can have a normalized hysteresis loss, expressed as tangent delta, that is 15%, 25%, 35%, or 45% smaller (where any value can be a lower and upper endpoint of a range, e.g., 15% to 35%) than the normalized hysteresis loss of an equivalent composition that does not comprises the tear strength agent and the dispersion aid.

Tangent delta is measured at a strain amplitude of 10%, a temperature ranging from 90°C to 110°C (e.g., 100°C), and a frequency ranging from 1 Hz to 10 Hz (e.g., 1 Hz).

In another aspect, the vulcanized composition can have a tear strength that is 50%, 100%, 150%, or 200% larger (where any value can be a lower and upper endpoint of a range, e.g., 50% to 150%) than the tear strength of an equivalent composition that does not comprises the tear strength agent and the dispersion aid.

Tear strength of a rubber composition measured after cure is determined in accordance with test method DIN 53539.

### A. Preparation and Applications of Rubber Compositions

Any of the compositions disclosed herein can be formed by any of the methods disclosed herein. For example, the methods disclosed herein can include forming a rubber composition by combining together an elastomer as disclosed herein; 20 phr to 60 phr of a first carbon black as disclosed herein; 0.1 phr to 3 phr of a tear strength agent as disclosed herein; 2 phr to 20 phr of a silica as disclosed herein; and 1 phr to 10 phr of a dispersion aid as disclosed herein. The various components of the rubber composition can be mixed together using rubber mixing equipment, such as an internal rubber mixer.

Generally, the elastomers can be blended, optionally with some of the other components, in at least one initial or non-productive mixing stage (in the absence of the curing agent) followed by a final or productive mixing stage in which the curing agent (and optionally one or more of the additional components) is added. In the final or productive mixing stage, the mixing typically occurs at a temperature, or ultimate temperature, lower than mixing temperature(s) used in any preceding non-productive mix stage(s). **In** one aspect, in any initial or non-productive stage(s), the various components, other than the curing agent, can be stirred in a mixer set at a suitable temperature, such as at least 100°C or 110°C and up to 150°C or 165°C. The temperature of the mixture rises as it is stirred. When the temperature reaches 150°C to 165°C, the mixture is dropped from the mixer and allowed to cool before returning it to the mixer. In any additional initial or non-productive mix stage after the first one, the mixing would occur at a temperature, or ultimate temperature, lower than the mixing temperature(s) used in any preceding non-productive mix stage(s) (e.g., 140°C to 165°C). In a final or productive stage, the mixture is returned to the mixer with the curing agent and mixed for 2 minutes to 30 minutes, to incorporate the curing agent into the mixture, but without appreciably curing the mixture. Vulcanization of a pneumatic tire incorporating the rubber composition can carried out at a temperature of 100°C to 200°C (e.g., 110°C to 180°C). Any vulcanization process known in the art can be used, such as heating in a press or mold or heating with superheated steam or hot air. Tires can be built, shaped, molded and cured by various methods which are known and will be readily apparent to those having skill in such art.

The disclosed method can further comprise coating at least one surface of a cord with the rubber composition and curing the cord, thereby forming a cord-reinforced rubber component (e.g., a ply). This cord-reinforced rubber component can then be incorporated into a tire. Alternatively, following the cord coating step, the coated-cord can be incorporated into an un-vulcanized, tubeless pneumatic rubber tire and the entire article (coated-cord and pneumatic rubber tire) can then be cured. The cord can comprise a metal (e.g., steel, brass), a fabric (e.g., polyester, nylon, aramid, rayon), or a combination thereof. In another aspect, at least one surface of each of a plurality of cords can be coated with the composition and then cured. Optionally, coated cord(s) can be passed through a calender which applies pressure and, further optionally, heat in order to provide the component with relatively smooth upper and lower surfaces defined by the rubber composition.

Also disclosed herein is an article comprising any one of the compositions disclosed herein. The article can be a tire or a component of a tire, such as a cord-reinforced rubber component of a tire (e.g., a ply). The tire can include additional components known to those who have skill in the art of tire formation, such as a tread, an inner liner, a sidewall or bead filler. The article as disclosed herein can be a component of a tire including a cord-reinforced rubber component of a tire (e.g., a ply), tread, an inner liner, a sidewall, bead filler, or a combination thereof. The tire can include a race tire, passenger tire, aircraft tire, agricultural tire, earthmover tire, off-the-road tire or truck tire. The tire may be a radial or bias-type tire. In one aspect, the tire is a pneumatic radial (medium) truck tire. The cord-reinforced rubber component of a tire can be a ply, e.g., one or more of a belt ply, a carcass ply, an overlay ply (covering one or more belt plies), and a ply strip (which may be spirally wound in a circumferential direction of the tire). The ply can comprise the rubber composition, for example, in the form of a rubber coating added to a textile or wire material. The ply may be formed in a calender device (e.g., a wire calender or textile calender). Vulcanization of the disclosed tires and component of tires is generally carried out at conventional temperatures ranging from 100°C to 200°C or from 110°C to 180°C. Such tires and component of tires can be built, shaped, molded and cured by various methods which are known and will be readily apparent to those having skill in such art.

### B. Aspects

The following listing of exemplary aspects supports and is supported by the invention provided herein.

Aspect 1. A vulcanizable composition, comprising: an elastomer; 20 phr to 60 phr of a first carbon black, wherein the first carbon black has a statistical thickness surface area (STSA) of 50 m²/g to 70 m²/g as measured in accordance with ASTM D6556-21; 0.1 phr to 3 phr of a tear strength agent; 2 phr to 20 phr of a silica, wherein the silica has a hydrated-cetyltrimethylammonium bromide (CTAB) surface area of 160 m²/g to 280 m²/g; and 1 phr to 10 phr of a dispersion aid, wherein the dispersion aid comprises one or more compounds with a softening point of 70°C to 120°C.

Aspect 2. The vulcanizable composition of aspect 1, wherein the first carbon black has an STSA of 55 m²/g to 65 m²/g.

Aspect 3. The vulcanizable composition of aspect 1 or 2, wherein the first carbon black has an oil absorption number of a compressed sample (COAN) of 90 cc/100 g to 110 cc/100 g as measured in accordance with ASTM D3493-21.

Aspect 4. The composition of any one of aspects 1-3, wherein the first carbon black has a COAN of 95 cc/100 g to 105 cc/100 g as measured in accordance with ASTM D3493-21.

Aspect 5. The vulcanizable composition of any one of aspects 1-4, wherein the composition comprises 30 phr to 50 phr of the first carbon black.

Aspect 6. The vulcanizable composition of any one of aspects 1-5, wherein the tear strength agent comprises a compound having a structure represented by a formula: 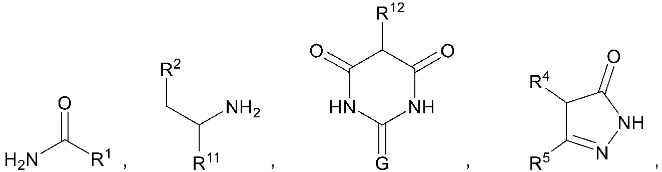 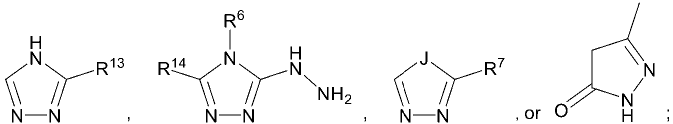 or any mixture thereof, wherein, R¹, R¹¹, R¹², R¹³, and R¹⁴ are individually selected from hydrogen, a hydrazyl group, an N'-alkylidene hydrazyl group, an N-allyl carbamoyl group, a 3-carboxyl acryloyl group, a hydrazyl carboxyamino group, a thiocarboxyl group, and thiol; R² is thiol or hydroxy; G is sulfur or oxygen; R⁴ is a C1 to C4 alkenyl group optionally further substituted with a hydrazyl group, an N'-alkylidene hydrazyl group, an N-allyl carbamoyl group, a 3-carboxyl acryloyl group, a hydrazyl carboxyamino group, a thiocarboxyl group, or thiol; R⁵ is an alkyl group, an aralkyl group, a heterocycloalkyl group, heterocycloalkenyl group, heterocycloalkynyl group, or a heteroaryl group; R⁶ is hydrogen or an amino; J is nitrogen, sulfur, or oxygen; and R⁷ is a heterocycloalkyl group, heterocycloalkenyl group, heterocycloalkynyl group, or a heteroaryl group.

Aspect 7. The vulcanizable composition of any one of aspects 1-5, wherein the tear strength agent comprises a compound having a structure represented by a formula:

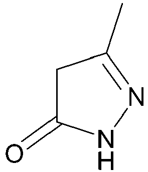

Aspect 8. The vulcanizable composition of any one of aspects 1-7, wherein the silica has a CTAB surface area of 220 m²/g to 250 m²/g.

Aspect 9. The vulcanizable composition of any one of aspects 1-8, wherein the silica is from 5 phr to 15 phr of the composition.

Aspect 10. The vulcanizable composition of any one of aspects 1-9, wherein the dispersion aid comprises a compound with a softening point of 70°C to 90°C.

Aspect 11. The vulcanizable composition of any one of aspects 1-9, wherein the dispersion aid comprises a compound with a softening point of 100°C to 120°C.

Aspect 12. The vulcanizable composition of any one of aspects 1-11, wherein the dispersion aid comprises at least one metal glycerolate compound or a derivative thereof.

Aspect 13. The vulcanizable composition of any one of aspects 1-12 wherein the dispersion aid comprises a compound having a structure represented by a formula: 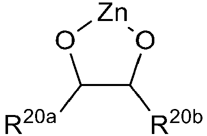 wherein R^{20a} and R^{20b} are independently selected from hydrogen, a substituted or unsubstituted alkyl group, and a substituted or unsubstituted alkenyl group.

Aspect 14. The vulcanizable composition of aspect 13, wherein R^{20a} and R^{20b} are independently selected from hydrogen; an alkyl group substituted with an amino, hydroxy, or thiol; and an alkenyl group substituted with an amino, hydroxy, or thiol.

Aspect 15. The vulcanizable composition of any one of aspects 1-14, wherein the dispersion aid comprises a compound having a structure represented by a formula:

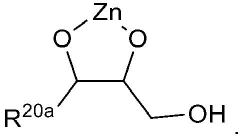

Aspect 16. The vulcanizable composition of any one of aspects 13-15, wherein R^{20a} is hydrogen.

Aspect 17. The vulcanizable composition of any one of aspects 1-16, wherein the composition comprises 1 phr to 6 phr of the dispersion aid.

Aspect 18. The vulcanizable composition of any one of aspects 1-17, wherein the elastomer comprises repeat units formed from residues of monomers selected from one or more of ethylene, propylene, isobutene, butadiene, isoprene, styrene, acrylonitrile, and a combination thereof.

Aspect 19. The vulcanizable composition of any one of aspects 1-17, wherein the elastomer comprises isoprene-isobutylene-rubber, ethylene-propylene-diene-terpolymer, styrene-butadiene rubber, acrylonitrile-butadiene rubber, acrylonitrile-butadiene-styrene copolymer, polybutadiene, natural rubber, cis polyisoprene, or a combination thereof.

Aspect 20. The vulcanizable composition of any one of aspects 1-17, wherein the elastomer comprises natural rubber, cis polyisoprene, or a combination thereof.

Aspect 21. The vulcanizable composition of any one of aspects 1-20, wherein the composition further comprises a coupling agent, an antidegradant, a processing aid, a fatty acid, a cobalt salt, a curing aid, a curing agent, or any combination thereof.

Aspect 22. The vulcanizable composition of aspect i.a.i.9, wherein the curing aid comprises an activator, an accelerator, or a combination thereof.

Aspect 23. The vulcanizable composition of any one of aspects 1-22, comprising: an elastomer comprising cis polyisoprene; 20 phr to 60 phr of the first carbon black; 0.1 phr to 3 phr of the tear strength agent; 1 phr to 10 phr of the dispersion aid; 5 phr to 20 phr of the silica; and 0.1 phr to 5 phr of a cobalt salt.

Aspect 24. A vulcanized composition comprising the vulcanizable composition of any one of aspects 1-23, wherein the vulcanizable composition has been cured.

Aspect 25. The vulcanized composition of aspect 24, wherein the vulcanized composition has a storage shear modulus that is at least 8% larger than the storage shear modulus of an equivalent composition that does not comprises the tear strength agent and the dispersion aid; and wherein the storage shear modulus is measured at a strain amplitude of 10%, a temperature ranging from 90°C to 110°C, and a frequency ranging from 1 Hz to 10 Hz.

Aspect 26. The vulcanized composition of aspect 24, wherein the vulcanized composition has a storage shear modulus that is 8% to 40% larger than the storage shear modulus of an equivalent composition that does not comprises the tear strength agent and the dispersion aid; and wherein the storage shear modulus is measured at a strain amplitude of 10%, a temperature ranging from 90°C to 110°C, and a frequency ranging from 1 Hz to 10 Hz.

Aspect 27. The vulcanized composition of any one of aspects 24-26, wherein the vulcanized composition has a normalized hysteresis loss, expressed as tangent delta, that is at least 15% smaller than the normalized hysteresis loss of an equivalent composition that does not comprises the tear strength agent and the dispersion aid; and wherein tangent delta is measured at a strain amplitude of 10%, a temperature ranging from 90°C to 110°C, and a frequency ranging from 1 Hz to 10 Hz.

Aspect 28. The vulcanized composition of any one of aspects 24-26, wherein the vulcanized composition has a normalized hysteresis loss, expressed as tangent delta, that is 15% to 45% smaller than the normalized hysteresis loss of an equivalent composition that does not comprises the tear strength agent and the dispersion aid; and wherein tangent delta is measured at a strain amplitude of 10%, a temperature ranging from 90°C to 110°C, and a frequency ranging from 1 Hz to 10 Hz.

Aspect 29. The vulcanized composition of any one of aspects 24-28, wherein the vulcanized composition has a tear strength that is at least 50% larger than the tear strength of an equivalent composition that does not comprises the tear strength agent and the dispersion aid; and wherein tear strength is measured in accordance with test method DIN 53539.

Aspect 30. The vulcanized composition of any one of aspects 24-28, wherein the vulcanized composition has a tear strength that is 50% to 200% larger than the tear strength of an equivalent composition that does not comprises the tear strength agent and the dispersion aid; and wherein tear strength is measured in accordance with test method DIN 53539.

Aspect 31. An article comprising the vulcanized composition of any one of aspects 24-30.

Aspect 32. The article of aspect 31, wherein the article comprises a tire or a component of a tire.

Aspect 33. The article of aspect 31, wherein the article comprises a cord-reinforced rubber component of a tire.

Aspect 34. The article of aspect 33, wherein the cord-reinforced rubber component of a tire is a tire ply.

Aspect 35. A method, comprising: forming a rubber composition by combining together an elastomer; 20 phr to 60 phr of a first carbon black; 0.1 phr to 3 phr of a tear strength agent; 2 phr to 20 phr of a silica; and 1 phr to 10 phr of a dispersion aid; coating at least one surface of a cord with the rubber composition; and curing the cord, thereby forming a cord-reinforced rubber component; wherein the first carbon black comprises a first carbon black with a statistical thickness surface area (STSA) of 50 m²/g to 70 m²/g; wherein the silica has a hydrated-cetyltrimethylammonium bromide (CTAB) surface area of 160 m²/g to 280 m²/g; and wherein the dispersion aid comprises one or more compounds with a softening point of 70°C to 120°C.

Aspect 36. The method of aspect 35, wherein the cord comprises a metal (*e.g*., *steel*), polyester, nylon, aramid, rayon, or a combination thereof.

Aspect 37. The method of aspect 35 or aspect 36, further comprising incorporating the cord-reinforced rubber component into a tire.

### C. Examples

The following examples are put forth so as to provide those of ordinary skill in the art with a complete disclosure and description of how the compounds, compositions, articles, devices and/or methods claimed herein are made and evaluated and are intended to be purely exemplary of the invention and are not intended to limit the scope of what the inventors regard as their invention. Efforts have been made to ensure accuracy with respect to numbers (*e*.*g*., amounts, temperature, etc.), but some errors and deviations should be accounted for. Unless indicated otherwise, parts are parts by weight, temperature is in °C or is at ambient temperature, and pressure is at or near atmospheric.

### Evaluation of Rubber Compositions

Five rubber compositions comprising a natural rubber-based matrix are provided in Table 1. Notable differences between the compositions include the presence of an intermediate carbon black, the presence of a tear strength agents, and the presence of and type of a dispersing agent. The control composition does not include a tear strength agent or a dispersion aid, while Experimental compositions A, B, C, and D all have a tear strength agent, a dispersion aid, or a combination thereof.

Briefly, the rubber compositions are prepared as follows. In a first non-productive step, a portion of the ingredients are combined in a lab-scale mixer and mixed until a mixture temperature of 160°C is achieved. The mixing continues at this temperature for 1-2 minutes. The mixture is then dropped from the mixer and allowed to cool. Next, in a productive mixing step, the remaining ingredients are added and mixing continues until the temperature of the mixture reaches 105°C. The mixture is then cured at 150°C and formed into strips suitable for testing.

**Table 1. Rubber Compositions**

| | | Experimental | | | |
|---|---|---|---|---|---|
| Ingredient | Control | A | B | C | D |
| Natural Rubber¹ | 100 | 100 | 100 | 100 | 100 |
| Intermediate Carbon Black² | 40 | 40 | 40 | 40 | 40 |
| Silica³ | 10 | 10 | 10 | 10 | 10 |
| Tear Strength Agent⁴ | -- | 1 | -- | 1 | 1 |
| Dispersion Aid⁵ | -- | -- | -- | -- | 4 |
| Dispersion Aid⁶ | -- | -- | 4 | 4 | -- |
| Silica Coupling Agent⁷ | 1.5 | 1.5 | 1.5 | 1.5 | 1.5 |
| Carbon Black Carrier⁸ | 1.5 | 1.5 | 1.5 | 1.5 | 1.5 |
| Antidegradants⁹ | 4.5 | 4.5 | 4.5 | 4.5 | 4.5 |
| Oil¹⁰ | | 1.5 | 1.5 | 1.5 | 1.5 |
| Fatty Acid¹¹ | 0.75 | 0.75 | 0.75 | 0.75 | 0.75 |
| Zinc Oxide | 8 | 8 | 8 | 8 | 8 |
| Cobalt Salt¹² | 0.5 | 0.5 | 0.5 | 0.5 | 0.5 |
| Accelerator¹³ | 2 | 2 | 2 | 2 | 2 |
| Curing Agent¹⁴ | 5.2 | 5.2 | 5.2 | 5.2 | 5.2 |
| Oil Carrier¹⁵ | 1.3 | 1.3 | 1.3 | 1.3 | 1.3 |
| | | | | | |
| Total phr | 175.25 | 177.75 | 180.75 | 181.75 | 181.75 |

| | | | | | |
|---|---|---|---|---|---|
| ¹ cis-1,4-polyisoprene ² SR409 carbon black from Takai Carbon CB, Ltd. ³ Amorphous high surface area precipitated silica, obtained as Zeosil^{®} Premium SW from Solvay with a CTAB surface area of 250 m²/g ¹ 3-methyl-5-pyrazolone, obtained as Acroad EN-01 from Otsuka Chemical Co, Ltd. ⁵ Suremix^{®} CO² from Polymer Solutions Group ⁶ Suremix^{®} S6 from Polymer Solutions Group ⁷ Si69 from Evonik Industries ⁸ Carbon black used as a carrier for the coupling agent ⁹ Mixture of dihydroquinoline with one or more phenylene diamine-based antioxidants ¹⁰ Rubber processing oil including Naphthenic oil ¹¹ Primarily stearic acid ¹² Cobalt neodecanoate salt, 20.5 wt % cobalt ¹³ Sulfenamide ¹⁴ Elemental sulfur Crystex HDOT20 from Flexsys ¹⁵ Oil used as a carrier for the curing agent | | | | | |

After curing, the rubber compositions are formed into appropriately-sized samples (based on the particular testing methodology used) and subjected to various tests. The composition properties provided in Table 2 (with the exception of the uncured modulus G') were obtained from various tests performed on rubber samples that were cured at 150°C for 32 minutes. Generally, the performance tests show that Experimental compositions A, B, C, and D exhibit improved stiffness, rolling resistance, and tear strength compared to the Control composition.

**Table 2. Properties of Rubber Compositions normalized to 100 for Control**

| | | Experimental | | | |
|---|---|---|---|---|---|
| Property | Control | A | B | C | D |
| Uncured G' (MPa) at 15% strain | 100 | 151 | 104 | 125 | 131 |
| G' (MPa) at 10% strain | 100 | 116 | 123 | 121 | 108 |
| Tangent Delta at 10% strain | 100 | 79 | 84 | 72 | 66 |
| Rebound (%) at 100°C | 100 | 93 | 101 | 103 | 103 |
| Tear Strength (N/mm) | 100 | 234 | 236 | 149 | 155 |
| Elongation at Break (%) | 100 | 120 | 69 | 91 | 106 |
| Wire Cord Adhesion, Aged (Newtons, 10-day water aged) | 100 | 123 | 51 | 53 | 117 |

Viscosity and stiffness of a rubber composition can be characterized using the uncured storage shear modulus value and the cured storage shear modulus value, respectively, of the composition. A larger cured storage shear modulus value indicates a stiffer compound. Storage shear modulus (G') of a rubber composition measured before and after cure was performed using rubber process analyzer RPA2000^{™} from Alpha Technologies in accordance with ASTM D5289-19a and/or ASTM D6601-19a. Uncured G' was measured at 15% strain and frequency of 0.83 Hz at 100°C. Cured G' was measured at 10% strain and frequency of 1 Hz at 100°C. All of the Experimental compositions exhibited higher G', and thus greater stiffness, than the Control composition.

Generally, tangent (tan) delta and rebound can be used as indicators of rolling resistance. Both a lower tan delta value and a higher rebound value can contribute to improved (lower) rolling resistance. Tan delta is the ratio of the loss modulus (G") to the storage shear modulus (G"/G'). Tan delta provides a means of measuring hysteresis, or the amount of energy lost per cycle during deformation of an elastomer. Since hysteresis accounts for the majority of rolling resistance, a composition with a lower tan delta can indicate a lower rolling resistance for a tire comprising said elastomer or composition. Tan delta was measured using RPA2000^{™} from Alpha Technologies at 10% strain and frequency of 1 Hz at 100°C, in accordance with ASTM D5289-19a and/or ASTM D6601-19a. Rebound is a measure of hysteresis of a composition when subject to loading. Measuring rebound can provide a means of determining the resilience of rubber within a range of impact strains and strain rate. The test was conducted using a ZwickRoell^{™} 5109 rebound resilience tester at a sample temperature of 100°C in accordance with test method DIN 53512. Briefly, resilience is recorded as pendulum rebound height after the pendulum hits a rubber sample. The higher the rebound value, the less energy is lost due to the pendulum's impact on the sample. All of the Experimental compositions exhibited overall improved rolling resistance compared to the Control composition.

All of the Experimental compositions exhibited higher tear strength (i.e., better resistance to tear) compared to the Control composition. Tear strength is measured by a peel strength adhesion test to determine interfacial adhesion between two samples of a rubber composition. Interfacial adhesion is determined by pulling one rubber composition away from the other at a right angle to the untorn test specimen with the two ends of the rubber compositions being pulled apart at a 180° angle to each other using an Instron instrument in accordance with test method DIN 53539, 1979 Edition, September 1979.

Tensile mechanical properties of a cured rubber composition, such as elongation at break, can be measured in accordance with ASTM D412, Method B. Briefly, a ring-shaped rubber sample of known dimensions is placed in an extensometer and then clamped in grips of a force displacement machine. The rubber sample is pulled at a set rate of 500 mm/min until it breaks. Elongation at break refers to the percentage of the original length of a rubber or elastomeric material to which the material is extended at rupture, when the material is subjected to a stretching or tensile force. The test was conducted at a sample temperature of 23°C. Experimental compositions A and D exhibit improved elongation at break compared to the control composition.

Wire cord adhesion is measured in accordance with ASTM D2229-10 (2014). Briefly, for this test, a block of the rubber composition is formed in a Four-Cavity Steel Cord Adhesion Mold fitted with steel cores. This test method covers the determination of the force required to pull a steel cord from the block of vulcanized rubber. Experimental compositions A and D exhibit improved cord adhesion compared to the Control composition.

## Claims

1. A vulcanizable composition comprising an elastomer, 20 phr to 60 phr of a first carbon black, wherein the first carbon black has a statistical thickness surface area (STSA) in a range of from 50 m²/g to 70 m²/g as measured in accordance with ASTM D6556-21, 0.1 phr to 3 phr of a tear strength agent, 2 phr to 20 phr of a silica, wherein the silica has a hydrated-cetyltrimethylammonium bromide (CTAB) surface area in a range of from 160 m²/g to 280 m²/g, and 1 phr to 10 phr of a dispersion aid, wherein the dispersion aid is or comprises one or more compounds with a softening point in a range of from 70°C to 120°C.

2. The composition of claim 1, wherein the first carbon black has an oil absorption number of a compressed sample (COAN) in a range of from 90 cc/100 g to 110 cc/100 g as measured in accordance with ASTM D3493-21.

3. The composition of claim 1 or 2, wherein the composition comprises 30 phr to 50 phr of the first carbon black.

4. The composition of at least one of the previous claims, wherein the tear strength agent is or comprises a compound having a structure represented by a formula: 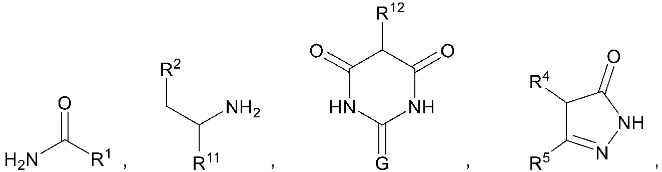 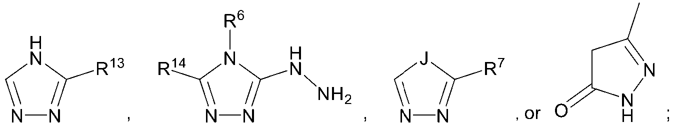 or any mixture thereof, wherein, R¹, R¹¹, R¹², R¹³, and R¹⁴ are individually selected from hydrogen, a hydrazyl group, an N'-alkylidene hydrazyl group, an N-allyl carbamoyl group, a 3-carboxyl acryloyl group, a hydrazyl carboxyamino group, a thiocarboxyl group, and thiol; R² is thiol or hydroxy; G is sulfur or oxygen; R⁴ is a C1 to C4 alkenyl group optionally further substituted with a hydrazyl group, an N'-alkylidene hydrazyl group, an N-allyl carbamoyl group, a 3-carboxyl acryloyl group, a hydrazyl carboxylation group, a thiocarboxyl group, or thiol; R⁵ is an alkyl group, an aralkyl group, a heterocycloalkyl group, heterocycloalkenyl group, heterocycloalkynyl group, or a heteroaryl group; R⁶ is hydrogen or an amino; J is nitrogen, sulfur, or oxygen; and R⁷ is a heterocycloalkyl group, heterocycloalkenyl group, heterocycloalkynyl group, or a heteroaryl group.

5. The composition of at least one of the previous claims wherein the dispersion aid is or comprises a compound with a softening point in a range of from 70°C to 90°C or with a softening point in a range of from 100°C to 120°C.

6. The composition of at least one of the previous claims, wherein the dispersion aid is or comprises at least one metal glycerolate compound or a derivative thereof.

7. The composition of at least one of the previous claims, wherein the dispersion aid is or comprises a zinc glycerolate compound having a structure represented by a formula: 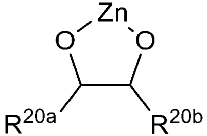 wherein R^{20a} and R^{20b} are independently selected from (i) hydrogen; a substituted or unsubstituted alkyl group; and a substituted or unsubstituted alkenyl group; or wherein R^{20a} and R^{20b} are independently selected from (ii) hydrogen; an alkyl group substituted with an amino, hydroxy, or thiol; and an alkenyl group substituted with an amino, hydroxy, or thiol.

8. The composition of at least one of the previous claims, wherein the elastomer comprises repeat units formed from residues of monomers selected from one or more of ethylene, propylene, isobutene, butadiene, isoprene, styrene, acrylonitrile, and a combination thereof.

9. The composition of at least one of the previous claims, wherein the composition further comprises a coupling agent, an antidegradant, a processing aid, a fatty acid, a cobalt salt, a curing aid, a curing agent, or any combination thereof.

10. The composition of at least one of the previous claims, comprising an elastomer comprising cis polyisoprene, 20 phr to 60 phr of the first carbon black, 0.1 phr to 3 phr of the tear strength agent, 1 phr to 10 phr of the dispersion aid, 5 phr to 20 phr of the silica, and 0.1 phr to 5 phr of a cobalt salt.

11. A vulcanized composition comprising the vulcanizable composition of at least one of the previous claims, wherein the vulcanizable composition has been cured.

12. The vulcanized composition of claim 11, wherein (i) the vulcanized composition has a storage shear modulus that is at least 8% larger than the storage shear modulus of an equivalent composition that does not comprises the tear strength agent and the dispersion aid, wherein the storage shear modulus is measured at a strain amplitude of 10%, a temperature ranging from 90°C to 110°C, and a frequency ranging from 1 Hz to 10 Hz; and/or wherein (ii) the vulcanized composition has a normalized hysteresis loss, expressed as tangent delta, that is at least 15% smaller than the normalized hysteresis loss of an equivalent composition that does not comprises the tear strength agent and the dispersion aid, wherein tangent delta is measured at a strain amplitude of 10%, a temperature ranging from 90°C to 110°C, and a frequency ranging from 1 Hz to 10 Hz.

13. The vulcanized composition of claim 11 or 12, wherein the vulcanized composition has a tear strength that is at least 50% larger than the tear strength of an equivalent composition that does not comprises the tear strength agent and the dispersion aid, wherein tear strength is measured in accordance with test method DIN 53539.

14. An article comprising the vulcanized composition of at least one of the claims 11 to 13, the article preferably being or comprising a cord-reinforced rubber component of a tire.

15. A method comprising:
forming a rubber composition by combining together an elastomer, 20 phr to 60 phr of a first carbon black, 0.1 phr to 3 phr of a tear strength agent, 2 phr to 20 phr of a silica, and 1 phr to 10 phr of a dispersion aid;
coating at least one surface of a cord with the rubber composition; and
curing the cord, thereby forming a cord-reinforced rubber component;
wherein the first carbon black comprises a first carbon black with a statistical thickness surface area (STSA) in a range of from 50 m²/g to 70 m²/g;
wherein the silica has a hydrated-cetyltrimethylammonium bromide (CTAB) surface area in a range of from 160 m²/g to 280 m²/g; and
wherein the dispersion aid is or comprises one or more compounds with a softening point in a range of from 70°C to 120°C; and wherein the method optionally further comprises incorporating the cord-reinforced rubber component into a tire.
